(19) Europäisches Patentamt / European Patent Office / Office européen des brevets

(11) **EP 1 665 249 B1**

(12) **EUROPEAN PATENT SPECIFICATION**

(45) Date of publication and mention
of the grant of the patent:
**14.05.2008  Bulletin 2008/20**

(51) Int Cl.:
**G11B 11/105** *(2006.01)*

(21) Application number: **04769856.8**

(22) Date of filing: **26.08.2004**

(86) International application number:
**PCT/IB2004/051569**

(87) International publication number:
**WO 2005/024814 (17.03.2005 Gazette 2005/11)**

(54) **REPRODUCING BEAM POWER CONTROL FOR DUAL-LAYER RECORDING MEDIUM**

WIEDERGABE-STRAHLLEISTUNGSREGELUNG FÜR DOPPELSCHICHTIGE
AUFZEICHNUNGSMEDIEN

REGLAGE DE PUISSANCE DE FAISCEAU DE LECTURE POUR SUPPORT D'ENREGISTREMENT
DOUBLE COUCHE

(84) Designated Contracting States:
**AT BE BG CH CY CZ DE DK EE ES FI FR GB GR
HU IE IT LI LU MC NL PL PT RO SE SI SK TR**

(30) Priority: **10.09.2003 EP 03103336**

(43) Date of publication of application:
**07.06.2006  Bulletin 2006/23**

(73) Proprietor: **Koninklijke Philips Electronics N.V.
5621 BA  Eindhoven (NL)**

(72) Inventor: **VERSCHUREN, Coen, A.
NL-5656 AA Eindhoven (NL)**

(74) Representative: **Uittenbogaard, Frank
Philips
Intellectual Property & Standards
P.O. Box 220
5600 AE Eindhoven (NL)**

(56) References cited:
**EP-A- 0 762 410          EP-A- 0 913 818
US-A- 5 719 829          US-A1- 2003 063 504
US-B1- 6 633 514**

**Description**

The present invention relates to a multi-layer recording medium, especially a dual-layer recording medium such as a dual-layer MAMMOS (Magnetic AMplifying Magneto-Optical System) disc comprising two recording or storage layers and one expansion or read-out layer, and to a method and an apparatus for reading such a multi-layer recording medium.

In conventional magneto-optical storage systems, the minimum width of the recorded marks is determined by the diffraction limit, that is, by the Numerical Aperture (NA) of the focusing lens and the laser wavelength. A reduction of the width is generally based on shorter-wavelength lasers and higher-NA focusing optics. During magneto-optical recording, the minimum bit length can be reduced to below the optical diffraction limit by using Laser Pulsed Magnetic Field Modulation (LP-MFM). In LP-MFM, the bit transitions are determined by the switching of the field and the temperature gradient induced by the switching of the laser (or any other suitable radiation source).

In domain expansion techniques, like MAMMOS, a written mark with a size smaller than the diffraction limit is copied from a storage layer to a read-out layer upon laser heating and with the help of an external magnetic field. Due to the low coercivity of this read-out layer, the copied mark will expand to fill the optical spot and can subsequently be detected (during read-out of the recording medium) with a saturated signal level that is independent of the mark size. Reversal of the external magnetic field collapses the expanded domain. On the other hand, a space in the storage layer will not be copied and no expansion will occur. Therefore, no signal will be detected in this case.

To read out the bits or domains in the storage layer, the thermal profile of the optical spot is used. When the temperature of the read-out layer is above a predetermined threshold value, the magnetic domains are copied from the storage layer to the magneto-statically coupled read-out layer. This is because the stray field $H_S$ from the storage layer, which is proportional to the magnetization of this layer, increases as a function of temperature. The magnetization $M_S$ increases as a function of temperature for the temperature region just above a compensation temperature $T_{co}$ where the effective magnetization, and thus the stray field of the storage layer, is reduced to zero. This characteristic results from the use of a rare earth-transition metal (RE-TM) alloy which generates two counteracting magnetizations $M_{RE}$ (rare earth component) and $M_{TM}$ (transition metal component) with opposite directions.

The application of an external magnetic field causes the copied domain in the read-out layer to expand so as to give a saturated detection signal independent of the size of the original domain. The copying process is non-linear. When the temperature is above the threshold value, magnetic domains are coupled from the storage layer to the read-out layer. For temperatures above the threshold temperature the following condition is satisfied:

$$H_S + H_{ext} \geq H_c \qquad\qquad\qquad (1)$$

where $H_S$ is the stray field of the storage layer at the read-out layer, $H_{ext}$ is the externally applied field, and $H_c$ is the coercive field of the read-out layer. The spatial region where this copying occurs is called the 'copy window'. The size w of the copy window is very critical for accurate read-out. When the condition (1) is not fulfilled (copy window size w = 0), no copying takes place at all. On the other hand, an oversized copy window will cause overlap with neighboring bits (marks) and will lead to additional 'interference peaks'. The size of the copy window depends on the exact shape of the temperature profile (that is, the exact laser power, but also the ambient temperature), on the strength of the externally applied magnetic field, and on material parameters that may show short- (or long-) range variations.

The laser power used in the read-out process should be high enough to enable copying. On the other hand, a higher laser power also increases the overlap of the temperature-induced coercivity profile and the stray field profile of the bit pattern. The coercivity $H_c$ decreases and the stray field increases with increasing temperature. When this overlap becomes too large, a correct read-out of a space is no longer possible due to false signals generated by neighboring marks. The difference between this maximum and the minimum laser power determines the power margin, which decreases strongly with decreasing bit length.

In MAMMOS, the synchronization of the external field with the recorded data is crucial. Accurate clock recovery is possible by using, for example, data-dependent field switching. Furthermore, the range of allowed laser powers for correct read-out at high densities is quite small. However, this sensitivity to the read-out laser power can also be exploited to achieve an accurate power control loop, that is, dynamic copy window control, using the read-out signals from the recorded data. This is done by adding a small modulating component (wobbling) to the laser power, thus inducing timing shifts of the MAMMOS signals. By, for example, lock-in detection of these shifts, any change in laser power, external field, or ambient temperature can be corrected to keep the copy window size constant. In this way, an accurate and robust read-out is possible, allowing much higher densities than with a conventional system. This increase/decrease (wobbling) may be applied with a predefined change pattern, for example a periodic pattern with a small amplitude. This wobbling causes the copy window to increase or decrease in size synchronously with the wobble frequency. When the copy window increases in size, the next transition will appear somewhat earlier than expected. On the other hand, when the copy window decreases in size, the next transition will be delayed slightly. This is indicated by the phase error amplitude. This phase error amplitude is a direct measure for the read-out parameter due to a non-linear square-root-like dependence of the copy window size on the read-out parameter. To obtain an absolute error signal that can be used as an input for the copy window control loop, the control method requires a suitable reference set-point, which corresponds to the optimum read-out parameters such as, for example, the external field and/or the laser power.

A major step in capacity has been achieved by using a dual-layer disk. In conventional magneto-optical (MO) systems, different kinds of dual-layer approaches are known. In most cases, two storage layers are closely spaced (or even directly connected, that is, exchange coupled) within the focus depth of the objective lens. Read-out of the different layers is based on a difference in Kerr rotation and ellipticity. For example, the interference layers are adjusted such that a first layer only gives Kerr rotation, while a second layer only gives Kerr ellipticity. Sometimes, different wavelengths are used to improve this effect. Another way to read both layers is a kind of multi-level approach: depending on the data in the different layers, four different signal levels (for example, Kerr rotation) are detected (++, +, -, --). However, the signal-to-noise-ratio for the medium levels (+, -) is lower.

Several options are possible for recording in the different layers. The magnetic properties may be adjusted such that a first layer has a higher Curie temperature (Tc) than a second layer. In this way, the low-Tc layer can be written at a lower laser power without affecting the high-Tc layer. Both layers are affected at a high laser power. Alternatively to or in combination with the above methods, differences in field sensitivity are used. Here the sign and amplitude of the applied magnetic field determine the switching of both layers. For example, a first layer always follows the sign of the field, whereas a second layer opposes the field when it is below a certain amplitude and follows the field when the amplitude is large enough. In this way, both layers are written in a single pass. To achieve this behavior, the second layer is exchange-coupled to another magnetic layer, for example a PtCo multilayer or the first storage layer.

Although dual-layer MO is certainly possible, an extension to dual-layer MAMMOS is far from trivial. In the MAMMOS process, a storage layer and a read-out layer are required. Together these layers are at least 30-70 nm thick, which makes the transmission of signals from a read-out layer below this set of layers much too low for accurate detection.

Documents WO99/39341 and JP2002-298465 disclose dual-layer MAMMOS discs for reproducing multi-value signals generated by a combination of stray fields of first and second storage layers in a common read-out layer. Both storage layers are independently read in succession by means of a laser power adapted to heat the non-read storage layer to its compensation temperature so as to ensure that only the mark of the read storage layer is copied to the read-out layer. Separate read-out of the different storage layers is thus possible by choosing the corresponding read-out laser power. This laser power should be such that the temperature of the layer that is not being read is brought close to its compensation temperature, thus eliminating any stray field influence on the read-out process.

As was noted above, the laser power and the applied external field should be very carefully balanced by copy window control procedures to enable the highest storage densities in the read-out process of a single layer disk. Despite the required tight control (typically around 1 % in laser power), there is quite some room to balance laser power against external field: if the field is somewhat too low, a higher laser power can still give a correct read-out, and vice versa. This is different, however, in the dual-layer case, because now the storage layer must reach a predetermined absolute temperature, although it is within more tolerant limits of about $\pm$ 10°C.

Ideally, every disk and every drive would have perfectly matched properties, so that the read power levels in the drive would correspond to the compensation temperatures of the different storage layers. This is not the case, however, for several reasons. Apart from contamination of the drive optics (dust) and, for example, degradation of the laser, the optical (reflectivity, absorption), thermal (conductivity, heat capacity) and magnetic ($T_{co}$ changes by up to 80 K / at % composition change) properties may change from disk to disk and over the radius of a single disc (non-uniformity in thickness and/or composition). Proper calibration of the read-out parameters corrects for the differences between drives, disks, and disk radii, and allows wider fabrication tolerances. Active copy window control is essential, however, as it is in read-out of single storage layer MAMMOS disks, in realizing a robust read-out at the highest densities. For dual storage layer MAMMOS, laser power and external field cannot be exchanged freely as in single layer MAMMOS. This is because the read-out temperature has to be kept quite close to the compensation temperature of the storage layer that is not being read, in order to prevent 'crosstalk' from this layer.

Document EP-A-0 762 410 describes, according to the seventh construction therein, a reproducing system for reproducing from a multi-valued optomagnetic recording medium comprising two recording layers and at least one aperture forming layer. The reproduction by irradiating the optomagnetic recording medium is performed through a two-power reproducing laser beam, namely a low- and high-power reproducing laser beam, whose waveform aswell as the magnetic field applied at the time of reproduction are changed in order to select a combination having the least reproducing error. However, document EP-A-0 762 410 mentions nowhere how to determine and prevent crosstalk between both recording layers.

It is an object of the present invention to provide a recording medium and a reading method and apparatus by means of which a proper read-out can be achieved for dual-layer storage media.

This object is achieved by providing a reading apparatus as claimed in claim 1, by providing a reading method as claimed in claim 17, and by providing a recording medium as claimed in claim 19.

Accordingly, crosstalk between the first and second storage layers can be reduced by keeping the read-out temperature close to the compensation temperature of the other storage layer which is not read.

The determination of the parameter may be based on a detected correlation between a first predetermined data pattern written in the first storage layer and a second predetermined data pattern written in the second storage layer on top of the first predetermined data pattern. Thereby, an initial calibration can be provided for compensation of drive-to-drive, disk-to-disk, and radial variations. Starting from a pre-set value of the read-out laser power for the first layer, the laser power is adjusted for the second layer by optimizing read-out of the known data pattern in that layer. Next, this process can be repeated for the other storage layer.

As an alternative, the parameter may be based on a detected error in the read-out signal of the first predetermined data pattern written in the first storage layer, the error being caused by the second predetermined data pattern written in the second storage layer. The number of determinations may be determined in response to an information written on the recording medium and specifying a characteristic of the recording medium. Thus, the manufacturer of the recording medium may provide on the medium an indication of uniformity to allow for a reduction in the number of calibrations to be performed.

Furthermore, the determination may be skipped in response to prior use information written on the recording medium, the radiation power then being based on at least one read-out parameter stored on the recording medium. The start-up time can thus be reduced in cases where the recording medium has been recently used in this drive. The reading apparatus may be adapted to suppress this skipping operation if a read-out error rate exceeds a predetermined threshold value.

The prior use information may comprise at least one recording medium identification stored in the reading apparatus or at least one recording apparatus identification stored on the recording medium. In particular, the prior use information may be stored together with a corresponding time and/or date information.

The determination and control means may be adapted to perform the parameter determination and power control at different radii of the recording medium.

As an alternative, the reading apparatus may be adapted to store at least one read-out parameter or a number of variables for an algorithm describing the at least one read-out parameter, as a function of the radius of the recording medium.

The external magnetic field may be controlled on the basis of a difference between the numbers of detected and expected read-out pulses. An independent copy window control is made possible thereby. An increase or decrease in the number of read-out pulses, which does not correlate with one of the data patterns, gives independent information on the copy window size and thus the required correction of the external magnetic field.

It can thus be assured that the first storage layer is read independently of the second storage layer. The first value of the radiation power is determined by the compensation temperature of the second storage layer and the second value of the radiation power is determined by the compensation temperature of the first storage layer.

Other advantageous further developments are defined in the dependent claims.

In the following, the present invention will be described on the basis of preferred embodiments with reference to the accompanying drawings, in which:

Fig. 1 is a diagram of a magneto-optical disc player according to a preferred embodiment,
Fig. 2 shows a schematic layer structure of a dual storage layer MAMMOS disc according to a first embodiment,
Fig. 3 shows a schematic layer structure of a dual storage layer MAMMOS disc according to a second embodiment,
Fig. 4 shows diagrams indicating temperature dependencies between a read-out layer coercivity and storage layer magnetizations for a first read-out type,
Fig. 5 shows diagrams indicating temperature dependencies between a read-out layer coercivity and storage layer magnetizations for a second read-out type,
Fig. 6 shows a diagram indicating the stray field amplitude in the read-out layer as a function of the distance between the storage and read-out layers for different storage layer thicknesses,
Fig. 7 shows a flow diagram of an initial power setting procedure according to an embodiment,
Fig. 8 shows an example of a set of data patterns in the first and second storage layers, and
Fig. 9 shows a diagram indicating the stray field distribution in the read-out layer as a function of the track direction for the data patterns of Fig. 8.

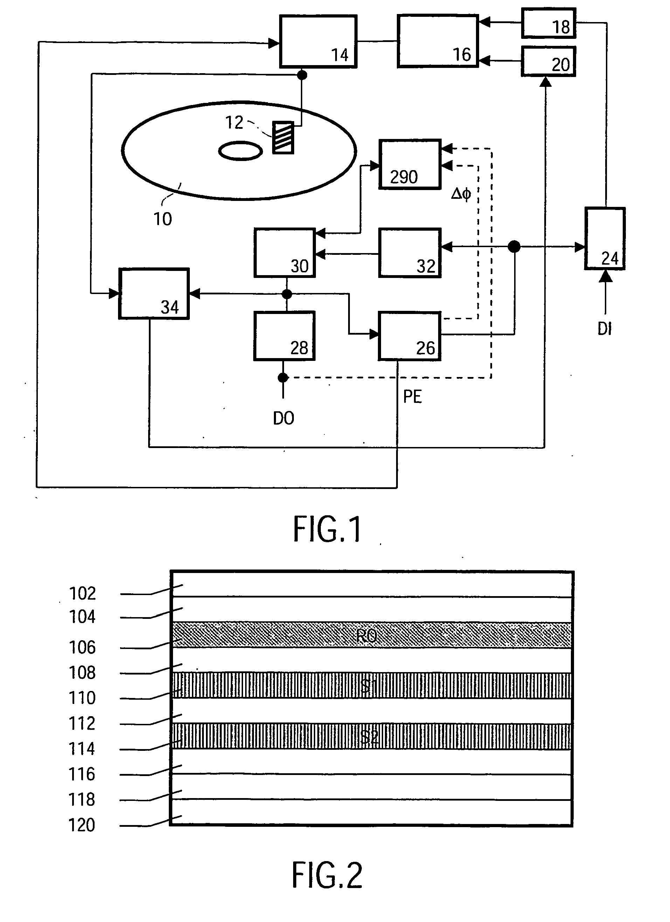

Fig. 1 schematically shows the construction of a MAMMOS disc player according to a preferred embodiment. The disc player comprises an optical pick-up unit 30 having a laser light radiating section for irradiation of a dual storage layer magneto-optical recording medium or record carrier 10, such as a dual storage layer MAMMOS disc, with light that has been converted, during recording, into pulses with a period synchronized with code data. The disc player further comprises a magnetic field applying section comprising a magnetic head 12 which applies a magnetic field in a controlled manner during recording and playback on the magneto-optical disc 10. In the optical pick-up unit 30, a laser is connected to a laser driving circuit that receives recording and read-out pulses from a recording/read-out pulse adjusting unit 32 so as to control the pulse amplitude and timing of the laser of the optical pick-up unit 30 during a recording and read-out operation. The recording/read-out pulse adjusting circuit 32 receives a clock signal from a clock generator 26 that comprises a PLL (Phase Locked Loop) circuit.

It is noted that, for reasons of simplicity, the magnetic head 12 and the optical pickup unit 30 are shown on opposite sides of the disc 10 in Fig. 1. However, they should preferably be arranged on the same side of the disc 10.

The magnetic head 12 is connected to a head driver unit 14 and receives code-converted data via a phase adjusting circuit 18 from a modulator 24 during recording. The modulator 24 converts input recording data DI into a prescribed code.

During playback, the head driver 14 receives a timing signal via a playback adjusting circuit 20 from a timing circuit 34, wherein the playback adjusting circuit 20 generates a synchronization signal for adjusting the timing and amplitude of pulses applied to the magnetic head 12. The timing circuit 34 derives its timing signal from the data read-out operation. Thus, a data dependent field switching can be achieved. A recording/playback switch 16 is provided for switching or selecting the respective signal to be supplied to the head driver 14 during recording and during playback.

Furthermore, the optical pick-up unit 30 comprises a detector for detecting laser light reflected from the disc 10 and for generating a corresponding reading signal applied to a decoder 28 that is arranged to decode the reading signal so as to generate output data DO. Furthermore, the reading signal generated by the optical pick-up unit 30 is supplied to a clock generator 26 in which a clock signal obtained from embossed clock marks of the disc 10 is extracted or recovered, and which supplies the clock signal for synchronization purposes to the recording pulse adjusting circuit 32 and to the modulator 24. In particular, a data channel clock may be generated in the PLL circuit of the clock generator 26. It is noted that the clock signal obtained from the clock generator 26 may be supplied to the playback adjusting circuit 20 as well so as to provide a reference or fallback synchronization which may support the data-dependent switching or synchronization controlled by the timing circuit 34.

In the case of data recording, the laser of the optical pick-up unit 30 is modulated with a fixed frequency corresponding to the period of the data channel clock, and the data recording area or spot of the rotating disc 10 is locally heated at equal distances. Additionally, the data channel clock output by the clock generator 26 controls the modulator 24 to generate a data signal with the standard clock period. The recording data are modulated and code-converted by the modulator 24 to obtain a binary run length information corresponding to the information of the recording data.

In Fig. 1, the timing circuit 34 is provided for supplying a data-dependent timing signal to the playback adjusting circuit 20. The data-dependent switching of the external magnetic field may alternatively be achieved by supplying the timing signal to the head driver 14 so as to adjust the timing or phase of the external magnetic field. The timing information is obtained from the (user) data on the disc 10. To achieve this, the playback adjusting circuit 20 or the head driver 14 is adapted to provide an external magnetic field which is normally in the expansion direction. When a rising signal edge of a MAMMOS peak is observed by the timing circuit 34 at an input line connected to the output of the optical pickup unit 30, the timing signal is supplied to the playback adjusting circuit 20 such that the head driver 14 is controlled to reverse the magnetic field after a short time so as to collapse the expanded domain in the read-out layer, and shortly after that to reset the magnetic field to the expansion direction. The total time between the peak detection and the field reset is set by the timing circuit 34 to correspond to the sum of the maximum allowed copy window and one channel bit length on the disc 10 (times the linear disc velocity).

Furthermore, a dynamic copy window control function is provided by applying a modulation, e.g. wobble or change pattern, to the head driver 14 and continuously measuring the size w of the copy window, using information from the detected data signal in the read mode. If the wobble frequency lies above the bandwidth of the clock recovery PLL circuit of the clock generator 26, the phase error of this PLL circuit can be used to detect the small deviation or phase error with respect to the expected transition position.

The frequency deviation of the introduced wobble or change pattern should have a zero average value. However, the amplitude $\Delta\phi$ of the phase error obtained here cannot be used yet as an absolute error signal for laser power control as only the absolute scale is known, but no reference (zero or offset) is present. That is, only changes in the size of the copy window can be measured. To circumvent this problem, the derivative of the copy window size w as a function of temperature can be measured to obtain control information for controlling the size w of the copy window. Due to the fact that the derivative or amount of change of the copy window size w directly leads to the phase amplitude $\Delta\phi$, the amplitude $\Delta\phi$ of the detected phase error corresponds to the derivative and can thus be used for copy window control. The deviation from a predetermined setpoint can then be used as a control signal PE for controlling the strength of the external magnetic field at the head driver 14.

Any changes in the size of the copy window due to changes in parameters, such as coil-disc distance, ambient temperature, etc., are counteracted by the controlled external magnetic field.

In the disc player shown in Fig. 1, a read-out control circuit 290 is provided, which is adapted to determine or adjust the laser power of the optical pickup unit 30. According to a preferred embodiment, the laser power is controlled by the read-out control circuit 290 independently of the copy window control at the clock generator 26, which may be based on the external magnetic field, laser power, or any other suitable read-out parameter. In particular, the read-out control circuit 290 determines a parameter that is a suitable and reliable indicator for crosstalk between the first and second storage layers of the MAMMOS disc 10.

Fig. 2 shows a layer structure of a dual storage layer MAMMOS disc according to a first embodiment. The solution proposed here is to use only one read-out layer 106 to reproduce the information in the different storage layers 110, 114 arranged one on top of the other. The read-out layer 106 is arranged on top of the two storage layers 110, 114 in the direction of the laser incident side. Recording of these storage layers 110, 114 is possible by any of the methods described in the prior art. The main difficulty is to fulfill the MAMMOS read-out requirements on the balance of coercivity, stray field (from storage layer at the read-out layer,) and applied external field, i.e. for both storage layers 110, 114. For MAMMOS reproduction of a mark bit, the magnetic properties of the storage and read-out layers 106, 110, 114, and the laser power for read-out are chosen such that the sum of the stray field generated by the mark and the applied external field is just greater than the coercivity of the read-out layer, that is, $H_S + H_{ext} > H_c$. As both storage layers 110, 114 produce a stray field, the equation can be modified as follows:

$$H_{S1} + H_{S2} + H_{ext} > H_c, \tag{2}$$

wherein $H_{S1}$ and $H_{S2}$ designate respective stray field strengths of the storage layers 110, 114.

To allow separate read-out of both storage layers, one layer being read without being influenced by the other layer, the layer structure shown in Fig. 2 is proposed according to the first embodiment of the dual storage layer MAMMOS disc. Starting from the laser incidence side, the generic layer stack comprises an optional first cover or substrate 102, a first dielectric layer 104 made of, for example, SiN, SiO$_2$, and the read-out layer 106, preferably made of GdFeCo or GdFe with a thickness of 10-30 nm, preferably 20 nm. Furthermore, a non-magnetic spacer layer 108 with a thickness of 1-15 nm, preferably 5 nm, and made of, for example, SiN or A1 is provided between the read-out layer 106 and the first storage layer 110. The first storage layer 110 has a thickness of preferably 8-35 nm and is preferably made of TbFeCo, possibly with the additions of rare earth, transition or other metals, non-metals such as Si, etc. An optional intermediate layer 112 is arranged between the first storage layer 110 and the second storage layer 114. The intermediate layer 112 may be a non-magnetic dielectric or metal spacer layer with a thickness of 1-15 nm, preferably 5 nm, or a Ru exchange coupling layer with a thickness of 0.1-5 nm. As a further alternative, no intermediate layer 112 may be used at all, such that a direct exchange coupling is provided between the first and second storage layers 110, 114.

The second storage layer 114 may have a thickness of preferably 10-100 nm and may be preferably made of TbFeCo, possibly with additions as described above in connection with the first storage layer 110. Additionally, an optional exchange bias layer 116, for example a multilayer of PtCo or PdCo, amorphous RE-TM material, etc. may be provided, followed by a second dielectric layer 118 made of SiN or SiO$_2$ and including an optional heat sink. Finally, an optional second substrate or cover 120 is provided.

The first and second storage layers 110 and 114 should have at least the following magnetic properties:

- ferrimagnetic with different compensation temperatures $T_{co1}$ and $T_{co2}$, both below the respective Curie temperatures $T_{c1}$ and $T_{c2}$,
- internal drive temperature $T_{ambient}$ ($< \sim 70°C$) $< T_{co1} \neq T_{co2} < \min (T_{c1}, T_{c2})$, and
- read-out temperatures $T_{read-out1} = T_{co2}$ and $T_{read-out2} = T_{co1}$, while the differences should be smaller than approximately 10°C to avoid interlayer crosstalk. Larger differences will limit the possible storage density.

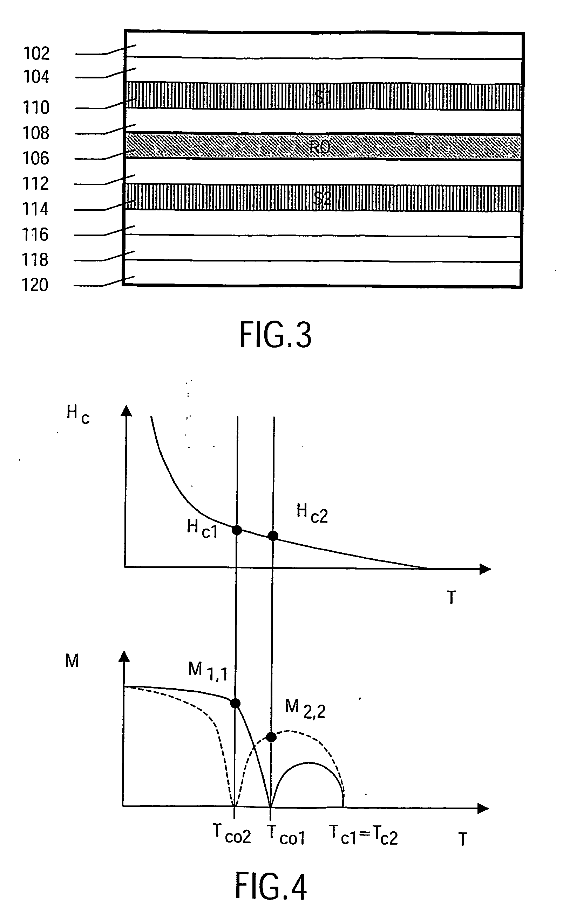

Fig. 3 shows a schematic layer structure of a dual storage layer MAMMOS disc according to a second embodiment. In this second embodiment, the read-out layer 106 is placed between the first and second storage layers 110, 114. In that case, the first storage layer 110 which is closest to the laser incidence side should preferably be thinner than approximately 10 nm and the dielectric layer(s) 104, 112 (optical interference) should preferably be adjusted to maximize the Kerr signal from the read-out layer 106 while suppressing that from the upper first storage layer 110.

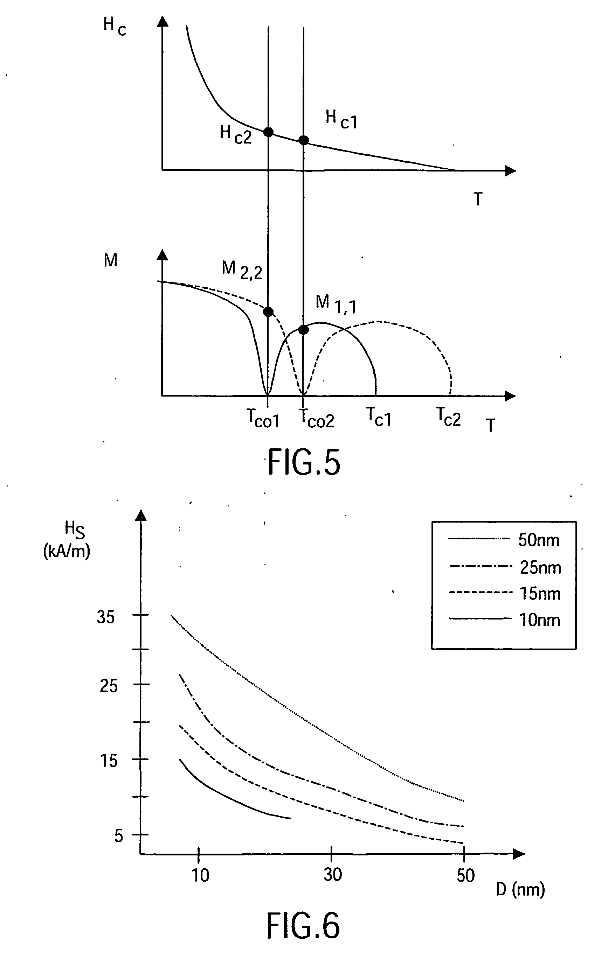

Figs. 4 and 5 show diagrams indicating temperature dependencies between a read-out layer coercivity $H_c$ and storage layer magnetizations M for respective first and second embodiments. The magnetization curves relating to the first storage layer 110 are indicated by solid lines, and the magnetization curves relating to the second storage layer 114 are indicated by dashed lines. $M_{1,1}$ means magnetization of the first storage layer 110 at the read-out temperature of the first storage layer 110, which is equal to the compensation temperature $T_{co2}$ of the second storage layer 114.

Similarly, $M_{2,2}$ means magnetization of the second storage layer 114 at the read-out temperature of the second storage layer 114, which is equal to the compensation temperature $T_{co1}$ of the first storage layer 110.

According to the proposed read-out scheme, read-out of the first storage layer 110 is achieved by having the read-out control circuit 290 of Fig. 1 adjust the laser power to heat the second storage layer 114 to its compensation temperature $T_{co2}$. Since the effective magnetization M vanishes at this temperature, the stray field contribution $H_{S2}$ from the second storage layer 114 also becomes zero. Thus, only the stray field contribution Hsi generated by the bits in the first storage layer 110 will trigger the MAMMOS copy and expansion read-out process. The same principle can be used for read-out of the second storage layer 114, i.e. the read-out control circuit 290 adjusts or changes the laser power to heat the first storage layer 110 to its compensation temperature $T_{co1}$ which will suppress $H_{S1}$ and allow separate or independent read-out of the data in the second storage layer 114. This simple layer selection method does not require any modifications to the optics of the optical pickup unit 30, i.e. no focus jumps, aberration correction, etc., and only very minor adjustments in the electronics are needed compared with a single-layer system.

From this read-out method it is clear that the read-out temperatures, and thus both compensation temperatures, should be above the (maximum) ambient temperature. Both compensation temperatures should also be below the lowest of the storage layers' Curie temperatures because a read-out temperature close to (or higher than) the Curie temperature may disturb or erase the data in the respective layer, especially when magnetic fields are applied.

The diagrams of Fig. 4 relate to the first embodiment of exchange-coupled storage layers with different field sensitivities, where the first storage layer 110 is read out at a lower temperature $T_{read-out1} = T_{co2}$ while the second storage layer 114 is read out at a higher temperature $T_{read-out2} = T_{co1}$. The Curie temperatures $T_{c1}$ and $T_{c2}$ of the first and second storage layers 110, 114 are equal. The diagrams of Fig. 5 relate to the second embodiment of separate, de-coupled storage layers with different Curie temperatures, where the first storage layer 110 is read out at a higher temperature $T_{read-out1} = T_{co2}$ while the second storage layer 114 is read out at a lower temperature $T_{read-out2} = T_{co1}$. Here, the Curie temperature $T_{c1}$ of the first storage layer 110 is lower than the Curie temperature $T_{c2}$ of the second storage layer 114.

To enable the MAMMOS read-out process, a number of additional conditions should be fulfilled by the combination of layer stack and magnetic properties of the read-out and storage layers 106, 110, 114:

- the external magnetic field $H_{ext}$ used during read-out should be sufficiently strong to drive the domain expansion process. For reasons of simplicity, it is preferable (but not necessary) that $H_{ext}$ is the same for both storage layers. Practical field strengths are between 8 and 16 kA/m, but may be lower or higher,
- at each of the read-out temperatures, the coercivity of the read-out layer 106 ($H_{c1}$ for read-out of the first storage layer 110, $H_{c2}$ for read-out of the second storage layer 114) should be greater than the applied external field, i.e. $H_{c1} > H_{ext1}$ and $H_{c2} > H_{ext2}$, or $\min(H_{c1}; H_{c2}) > H_{ext}$. If this condition is not fulfilled, the read-out process will no longer be determined only by the data in the storage layer, i.e. the read-out layer's magnetization will 'follow' the applied magnetic field instead of the data,
- the minimum strength of the stray fields generated by the data in the storage layers 110, 114 which is required in the read-out layer 106 is determined by the difference $H_c-H_{ext}$. Thus, $H_{S1} > H_{c1} - H_{ext1}$ and $H_{S2} > H_{c2} - H_{ext2}$. These stray fields depend on the respective magnetizations $M_{1,1}$ and $M_{2,2}$ of the storage layers 110, 114 at their read-out temperatures (as explained earlier, $M_{1,2}$ and $M_{2,1}$ should preferably be close to zero), the respective thicknesses t1 and t2 of the storage layers 110, 114, and the respective distances D1 and D2 between the storage layers 110, 114 and the read-out layer 106.

Fig. 6 shows a diagram indicating the stray field amplitude $H_S$ in the read-out layer 106 generated by bits in the storage layer as a function of the distance between the storage and read-out layers for different storage layer thicknesses t ranging from 10 nm (solid line) to 50 nm (dotted line) and for a magnetization M = 100 kA/m. As shown in Fig. 2, a thicker layer gives a stronger stray field $H_S$, but this field rapidly decreases at a greater distance.

Assuming realistic values for the magnetization M, this means that in the first embodiment of Fig. 2 the upper, first storage layer 110 should preferably be thinner than the lower, second storage layer 114. To enable reliable and high-density recording, the storage layers 110, 114 should preferably have a thickness between 8 and 100 nm. Thicker layers are possible, but at the cost of some density. Typical values for the first storage layer 110 may be between 10 and 35 nm, and for the second storage layer 114 between 10 and 100 nm.

All the layers shown in Figs. 2 and 3 can be sputtered using conventional equipment. Only a few additional layers (typically 1 to 3) are needed compared with a single-layer MAMMOS disk. Normally, there is no need for a spin-coated or PSA (Pressure Sensitive Adhesive) spacer layer with tight tolerances and related spherical aberration problems. Moreover, as was noted above, no modifications are required to the optical system, only minor modifications to electronics, i.e. to the read-out control circuit 290 for switching the laser power for read-out of the different storage layers 110, 114. Assuming an allowed residual stray field due to a non-zero magnetization of 1 kA/m, allowed deviations were estimated in the order of $\pm$ 10 °C. Compared with the read-out power margin of ~1% => 1.5 °C, this is quite tolerant. Such allowed deviations also pose no problems to the manufacture of such disks.

In the following, examples of stack designs of the above first and second embodiments (as shown in Figs. 4 and 5) are given for λ = 405 nm and a numerical aperture NA=0.85:

For the first embodiment (shown in Fig. 4):

45 om SiN
20 nm GdFeCo
5 nm SiN
20 nmTbFeCo,1
5 nm SiN
50 nm TbFeCo,2
20 nm CoPt multilayer
20 nm SiN
30 nm A1 alloy
substrate

This stack design according to the first read-out type leads to the following read-out parameters: $T_{co1}$ =150°C, $T_{co2}$=130°C, $T_{c1}=T_{c2}$=200°C, $H_{c1}$=35kA/m, $M_{1,1}$=90kA/m, $H_{c2}$=25kA/m, $M_{2,2}$=50 kA/m, and $H_{ext}$=16kA/m.

For the second embodiment (shown in Fig. 5):

45 nm SiN

20 nm GdFeCo

5 nm SiN

10 nmTbFeCo,1

5 nm SiN

50 nm TbFeCo,2

20 nm SiN

30 nm A1 alloy

substrate

This stack design according to the second read-out type leads to the following read-out parameters: $T_{co1}$=150°C, $T_{co2}$=130°C, $T_{c1}$ =200°C, $T_{c2}$=250°C, $H_{c1}$=25kA/m, $M_{1,1}$ =70 kA/m, $H_{c2}$=35kA/m, $M_{2,2}$=90kA/m, and $H_{ext}$=16kA/m.

Other variations, for example with switched low and high temperatures, are also possible.

It is clear from the above that the read-out laser power levels for both storage layers have to be calibrated in some way. A good way to do this is to record or write a first known or predetermined data pattern in the first storage layer 110 and a second known or predetermined data pattern in the second storage layer 114, directly below the first pattern in the first storage layer 110. Depending on the above two media types, i.e. exchange-coupled layers with different field sensitivities (cf. Fig. 4) or separate, de-coupled layers with different Curie temperatures (cf. Fig. 5) and the related recording methods, this may be done in a single pass or in two passes.

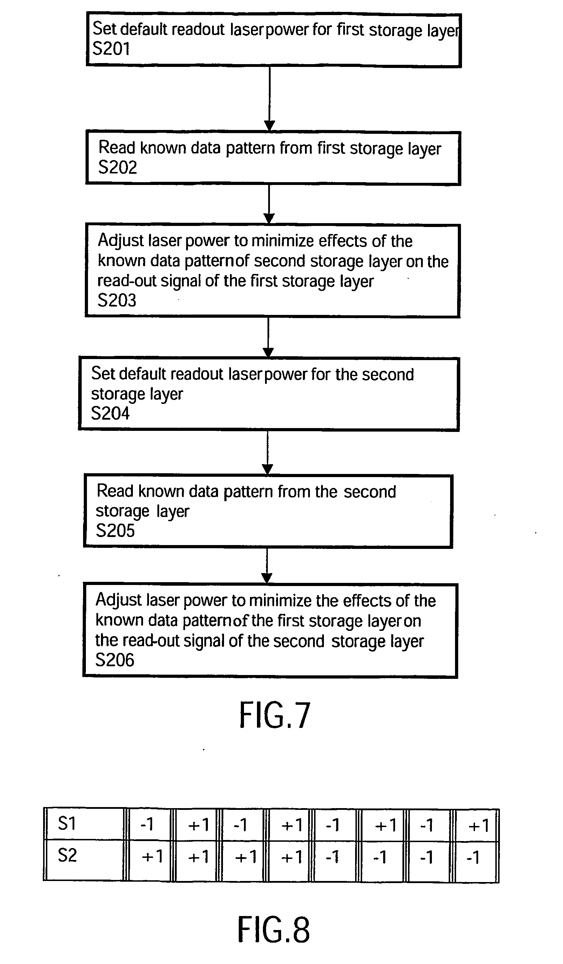

Fig. 7 is a flow diagram of an initial power setting or calibration procedure according to the preferred embodiment. Starting from a pre-set or default value of the read-out laser power for the first storage layer 110 (step S201), the first known data pattern is read from the first storage layer 110 (step S202), and the laser power is adjusted by the read-out control circuit 290 to minimize the crosstalk effects of the data pattern in the second storage layer 114 (step S203). In particular, the read-out signal is compared with the first known data pattern provided in the first storage layer 110. The optimum laser power corresponds to the best match, for example characterized by a cross-correlation method or by a minimum in Bit Error Rate, and is stored. Then this process is repeated in steps S204 to S206 for the second storage layer 114 and the second known data pattern of the second storage layer 114.

It may be advantageous to evaluate both known data patterns simultaneously while adjusting the read-out laser power. The best match to the first known data pattern then leads to the optimized read-out power for the first storage layer 110, and the best match to the second known pattern leads to the optimized read-out power for the second storage layer 114. Since it is known which power is higher, the search direction, i.e. higher or lower power, and even a good guess of the other laser power can be made as soon as one of the data patterns has been matched. The advantage of this approach is that it is faster and may allow shorter and/or less calibration areas, thus reducing the capacity overhead.

Fig. 8 shows an example of a useful set of data patterns in the first and second storage layers, where "+1" and "-1" indicate the magnetization directions of individual bits. The correct output for the first storage layer 110 would be a single alternating bit pattern. However, if the magnetization of the second storage layer 114 is too strong, additional MAMMOS signal peaks will appear in the parts where the second storage layer 114 has "+1" data, due to the fact that the total stray field becomes too strong. On the other hand, some peaks will be suppressed in those parts where the second storage layer 114 has "-1" data, due to the fact that the total stray field is not sufficient to trigger a read-out process.

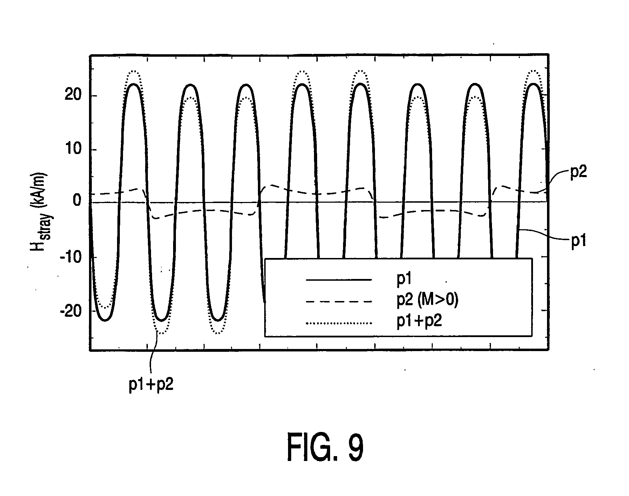

Fig. 9 shows a diagram indicating the stray field distribution in the read-out layer as a function of the track direction for the data patterns of Fig. 8 in the case of a read-out operation of the first storage layer 110. The horizontal dotted line indicates the optimum stray field value for the MAMMOS read-out. The sinusoidal solid line p1 corresponds to the stray field caused by the first data pattern in the first storage layer, while the rectangular dashed line P2 corresponds to the stray field caused by the second data pattern of the second storage layer 114 at a non-zero magnetization (M>0). It is clear that any influence or crosstalk from the second storage layer 114 due to the non-zero magnetization M at read-out temperature will cause a change in the total stray field indicated by the dotted sinusoidal line p1+p2. If this influence is in excess of a certain value (e.g. 1 kA/m), the first data pattern is no longer correctly reproduced.

To relax the manufacturing tolerance of the discs, for example matching of magnetic properties to stack thickness of various layers: tuning $H_c$ vs. T with $H_{S1}$, $H_{S2}$ and $H_{ext}$, it is advantageous also to adjust the external field amplitude $H_{ext}$ during the power setting or calibration procedure. Changing the laser power will not only influence the contribution from the other storage layer, but will also change the size of the copy window, and with that the read-out resolution. Only a perfectly matched disk 10 will reach the optimum copy window at the same laser power at which it reaches the correct read-out temperature, i.e. the compensation temperature of the other storage layer.

To achieve this relaxed tolerance, the power setting or calibration procedure must allow a (largely) independent control of the copy window and the suppression of the other storage layer. For the latter, the procedure remains very similar to what has been described above. For each storage layer, the laser power is tuned so that the first known data pattern is correctly reproduced and no effect of the second data pattern is detected. In the example of Fig. 9, any effect of the second data pattern will be visible as a signal with the same period as the second data pattern, i.e. 2x4 bits and, alternatingly, too many and too few peaks.

For example, auto-correlation techniques may be used to detect this. To achieve an independent copy window control, tuning of the external field should preferably be based on the number of detected MAMMOS peaks. For example, additional peaks will appear if the copy window is too large; some or all peaks will be missing if the copy window is too small. This increase or decrease in the number of peaks, however, does not correlate with the second data pattern, provided that the second data pattern is, for example, not the same as the first data pattern, which should obviously be avoided, and therefore gives independent information on the copy window size and thus the required correction of the external field $H_{ext}$. If too many peaks are detected, $H_{ext}$ should be reduced, and if too few peaks are detected, $H_{ext}$ should be increased. In Fig. 1, this control can be performed by means of the control signal PE.

Examples of possible system implementations will be described below. According to a first option, one or more different radii can be calibrated upon insertion of the disk 10. This may be necessary for compensating for radial non-uniformity. Read-out power level and possibly $H_{ext}$ parameters are stored in the drive and/or on disk 10. These parameters may be a set of amplitudes with radial positions, or a number of variables for an algorithm describing the laser power and possibly $H_{ext}$ as a function of the radius, for example start, middle and end value, plus some curvature or order parameter.

According to a second option, the disk manufacturer may provide algorithm variable information on the disk, thus allowing a further reduction in the number of calibrations to be performed. For example, if a disk is highly uniform, one or two calibrations are sufficient for the whole disk, whereas a non-uniform disk needs many more.

According to a third option, it is checked upon insertion of the disk, whether this disk has been recently used in this drive. If it has, power setting or calibration is skipped to reduce the start-up time and the stored parameters (if available) are used to determine the read-out power levels and possibly $H_{ext}$. Afterwards, calibration is only performed in case of high error rates. Thus, this option may require storing the disk's ID in the drive or storing the drive's ID on the disk, for example, by reserving space for five drives, overwriting the oldest if necessary, preferably along with some time/date information and the laser power parameters and possibly $H_{ext}$. This may prevent initial read-out problems, for example if the disk 10 has been previously used in a drive that has updated the disk's power parameter fields with different settings.

It is noted that the present invention may be applied to any reading system for domain expansion magneto-optical disc storage systems for reading from two storage layers. Layer stacks and read-out methods similar to those proposed above may also be used in systems with, for example, card-shaped media, non-moving, stationary read-out principles based on arrays of optical spots and/or thin-film magnetic sensors (such as GMR or TMR), or alternative local heating methods such as, for example, addressable crossed metal wires inside or brought close to the media.

The read-out control circuit 290 may be implemented by a hardware circuit or alternatively by a software-controlled analog or digital processing circuit, or may be incorporated as a new routine in an existing control program for controlling the disc player. The embodiments may thus vary within the scope of the attached claims.

## Claims

1. A reading apparatus for reading from a magneto-optical recording medium (10) comprising a first storage layer (S1) and a second storage layer (S2) and a read-out layer (RO), wherein an expanded domain leading to a read-out pulse is generated in said read-out layer (RO) by copying a mark region from said first or said second storage layer to said read-out layer through heating by a radiation power with the help of an external magnetic field, said apparatus comprising:

   a) setting means (290) for setting said radiation power to a first value for reading from said first storage layer and to a second value for reading from said second storage layer, said first and second storage layers being readable separetely;
   b) determination means (290) for determining a parameter; and
   c) control means (290) for controlling said radiation power on the basis of said determined parameter;

   **characterized in that** said parameter indicates crosstalk between said first and second storage layers.

2. A reading apparatus according to claim 1, wherein said determination means (290) is adapted to determine said parameter from a detected correlation between a first predetermined data pattern written in said first storage layer (S 1) and a second predetermined data pattern written in said second storage layer on top of said first predetermined data pattern.

3. A reading apparatus according to claim 1, wherein said determination means (290) is adapted to determine said parameter from a detected error in a read-out signal of a first predetermined data pattern written in said first storage layer (S1), said error being caused by a second predetermined data pattern written in said second storage layer, said first and second predetermined data patterns being written one on top of the other.

4. A reading apparatus according to claim 1, wherein said control means (290) is arranged to control the number of determinations by said determination means (290) in response to an information written on said recording medium and specifying a characteristic of said recording medium (10).

5. A reading apparatus according to claim 4, wherein said characteristic specifies a uniformity of said recording medium.

6. A reading apparatus according to claim 1, wherein said control means (290) is adapted to skip said determination by said determination means (290) in response to a prior use information, and to control said radiation power on the basis of at least one read-out parameter stored on said recording medium (10).

7. A reading apparatus according to claim 6, wherein said reading apparatus is adapted to suppress said skipping operation if a read-out error rate exceeds a predetermined threshold value.

8. A reading apparatus according to claim 6 or 7, wherein said prior use information comprises at least one recording medium identification stored in said reading apparatus or at least one recording apparatus identification stored on said recording medium (10).

9. A reading apparatus according to claim 8, wherein said prior use information is stored together with a corresponding time and/or date information.

10. A reading apparatus according to claim 1, wherein said determination and control means (290) are adapted to perform said parameter determination and power control at different radii of said recording medium.

11. A reading apparatus according to any one of the preceding claims, wherein said reading apparatus is adapted to store at least one read-out parameter or a number of variables for an algorithm describing the at least one read-out parameter as a function of the radius of said recording medium (10).

12. A reading apparatus according to claim 1, wherein said reading apparatus is adapted to control said external magnetic field on the basis of a difference between the numbers of detected and expected read-out pulses.

13. A reading apparatus according to claim 1, wherein said control means (290) is adapted to control said radiation power so as to minimize said parameter.

14. A reading apparatus according to claim 1, wherein said reading apparatus is adapted to read out said first storage layer (S1) independently of said second storage layer (S2).

15. A reading apparatus according to claim 14, wherein said first value of said radiation power is determined by a compensation temperature of said second storage layer (S2) and said second value of said radiation power is determined by a compensation temperature of said first storage layer (S1).

16. A reading apparatus according to claim 1, wherein said control means (290) is adapted to perform said power control independently of a field control of a copy window used for mark copying.

17. A method of reading a magneto-optical recording medium (10) comprising a first storage layer (S1) and a second storage layer (S2) and a read-out layer (RO), wherein an expanded domain leading to a read-out pulse is generated in said read-out layer (RO) by copying a mark region from said first or said second storage layers to said read-out layer through heating by a radiation power with the help of an external magnetic field, said method comprising the steps of:

   a) setting said radiation power to a first value for reading from said first storage layer and to a second value for reading from said second storage layer, said first and second storage layers being readable separetely;
   b) determining a parameter; and
   c) controlling said radiation power based on said determined parameter;

   **characterized in that** said parameter indicates crosstalk between said first and second storage layers.

18. A method according to claim 17, wherein said parameter is determined during an initial calibration based on a detected correlation between a first predetermined data pattern written in said first storage layer (S1) and a second predetermined data pattern written in said second storage layer on top of said first predetermined data pattern.


**Patentansprüche**

1. Auslesegerät zum Auslesen eines magnetooptischen Aufzeichnungsmediums (10) mit einer ersten Speicherschicht (S1) und einer zweiten Speicherschicht (S2) und mit einer Ausleseschicht (RO), wobei eine erweiterte Domäne, die zu einem Ausleseimpuls führt, in der genannten Ausleseschicht (RO) **dadurch** erzeugt wird, dass ein Markierungsgebiet aus der genannten ersten oder der genannten zweiten Speicherschicht in die genannte Ausleseschicht kopiert wird, und zwar durch Erhitzung durch eine Strahlungsleistung mit Hilfe eines externen Magnetfeldes, wobei das genannte Gerät Folgendes umfasst:

   a) Einstellmittel (290) zum Einstellen der genannten Strahlungsleistung auf einen ersten Wert, zum Auslesen der genannten ersten Speicherschicht und auf einen zweiten Wert, zum Auslesen der zweiten Speicherschicht, wobei die genannte erste und zweite Speicherschicht einzeln ausgelesen werden können,
   b) Ermittlungsmittel (290) zum Ermitteln eines Parameters; und
   c) Steuermittel (290) zum Steuern der genannten Strahlungsleistung auf Basis des genannten ermittelten Parameters,

   **dadurch gekennzeichnet, dass** der genannte Parameter ein Übersprechen zwischen der genannten ersten und zweiten Speicherschicht angibt.

2. Auslesegerät nach Anspruch 1, wobei die genannten Ermittlungsmittel (290) dazu vorgesehen sind, den genannten Parameter aus einer detektierten Korrelation zwischen einem ersten vorbestimmten Datenmuster in der genannten ersten Speicherschicht (S1), und einem zweiten vorbestimmten Datenmuster in der genannten zweiten Speicherschicht oben auf dem genannten ersten vorbestimmten Datenmuster zu ermitteln.

3. Auslesegerät nach Anspruch 1, wobei die genannten Ermittlungsmittel (290) dazu vorgesehen sind, den genannten Parameter aus einem detektierten Fehler in einem Auslesesignal eines ersten vorbestimmten Datenmusters in der genannten ersten Speicherschicht (S1) zu ermitteln, wobei der genannte Fehler durch ein zweites vorbestimmtes Datenmuster in der genannten zweiten Speicherschicht verursacht wird, wobei das genannte erste und zweite vorbestimmte Datenmuster übereinander geschrieben sind.

4. Auslesegerät nach Anspruch 1, wobei die genannten Steuermittel (290) dazu vorgesehen sind, die Anzahl Ermittlungen durch die genannten Ermittlungsmittel (290) in Reaktion auf eine Information in dem genannten Aufzeichnungsmedium zu steuern und ein Kennzeichen des genannten Aufzeichnungsmediums (10) zu spezifizieren.

5. Auslesegerät nach Anspruch 4, wobei das genannte Kennzeichen eine Einheitlichkeit des genannten Aufzeichnungsmediums spezifiziert.

6. Auslesegerät nach Anspruch 1, wobei die genannten Steuermittel (290) dazu vorgesehen sind, die genannte Ermittlung durch die genannten Ermittlungsmittel (290) in Reaktion auf eine bekannte Vorbenutzungsinformation zu überspringen und die genannte Strahlungsleistung auf Basis wenigstens eines in dem genannten Aufzeichnungsmedium (10) gespeicherten Ausleseparameters zu steuern.

7. Auslesegerät nach Anspruch 6, wobei das genannte Auslesegerät dazu vorgesehen ist, den genannten Sprungvorgang zu unterdrücken, wenn ein Auslesefehler einen vorbestimmten Schwellenwert übersteigt.

8. Auslesegerät nach Anspruch 6 oder 7, wobei die genannte Vorbenutzungsinformation wenigstens eine Identifikation des Aufzeichnungsmediums umfasst, die in dem genannten Auslesegerät gespeichert ist oder wenigstens eine Identifikation des Aufzeichnungsgeräts, die in dem genannten Aufzeichnungsmedium (10) gespeichert ist.

9. Auslesegerät nach Anspruch 8, wobei die genannte Vorbenutzungsinformation zusammen mit einer entsprechenden Zeit- und/oder Datumsinformation gespeichert ist.

10. Auslesegerät nach Anspruch 1, wobei die genannten Ermittlungs- und Steuermittel (290) dazu vorgesehen sind, die genannte Parameterbestimmung und Leistungssteuerung an verschiedenen Radien des genannten Aufzeichnungsmediums durchzuführen.

11. Auslesegerät nach einem der vorstehenden Ansprüche, wobei das genannte Auslesegerät dazu vorgesehen ist, wenigstens einen Ausleseparameter oder eine Anzahl Variablen für einen Algorithmus zu speichern, der den wenigstens einen Ausleseparameter als eine Funktion des Radius des genannten Aufzeichnungsmediums (10) beschreibt.

12. Auslesegerät nach Anspruch 1, wobei das genannte Auslesegerät dazu vorgesehen ist, das genannte externe Magnetfeld auf Basis einer Differenz zwischen der Anzahl detektierter und erwarteter Ausleseimpulse zu steuern.

13. Auslesegerät nach Anspruch 1, wobei die genannten Steuermittel (290) dazu vorgesehen sind, die genannte Strahlungsleistung zu steuern, so dass der genannte Parameter minimiert wird.

14. Auslesegerät nach Anspruch 1, wobei das genannte Auslesegerät dazu vorgesehen ist, die genannte erste Speicherschicht (S1) unabhängig von der genannten zweiten Speicherschicht (S2) auszulesen.

15. Auslesegerät nach Anspruch 14, wobei der genannte erste Wert der genannten Strahlungsleistung durch eine Ausgleichtemperatur der genannten zweiten Speicherschicht (S2) bestimmt wird und der genannte zweite Wert der genannten Strahlungsleistung durch eine Ausgleichtemperatur der genannten ersten Speicherschicht (S1) bestimmt wird.

16. Auslesegerät nach Anspruch 1, wobei die genannten Steuermittel (290) dazu vorgesehen sind, die genannte Leistungssteuerung unabhängig von einem Steuerbereich eines zur Markierungskopierung verwendeten Kopierfensters durchzuführen.

17. Verfahren zum Auslesen eines magnetooptischen Aufzeichnungsmediums (10) mit einer ersten Speicherschicht (S1) und einer zweiten Speicherschicht (S2) und mit einer Ausleseschicht (RO), wobei eine erweiterte Domäne, die zu einem Ausleseimpuls führt, in der genannten Ausleseschicht (RO) **dadurch** erzeugt wird, dass ein Markierungsgebiet aus der genannten ersten oder der genannten zweiten Speicherschicht in die genannte Ausleseschicht kopiert wird, und zwar durch Erhitzung durch eine Strahlungsleistung mit Hilfe eines externen Magnetfeldes, wobei das genannte Verfahren die nachfolgenden Verfahrensschritte umfasst:

a) das Einstellen der genannten Strahlungsleistung auf einen ersten Wert, zum Auslesen der genannten ersten Speicherschicht und auf einen zweiten Wert, zum Auslesen der genannten zweiten Speicherschicht, wobei die genannte erste und zweite Speicherschicht einzeln ausgelesen werden können,
b) das Ermitteln eines Parameters; und
c) das Steuern der genannten Strahlungsleistung auf Basis des genannten ermittelten Parameters,

**dadurch gekennzeichnet, dass** der genannte Parameter ein Übersprechen zwischen der genannten ersten und zweiten Speicherschicht angibt.

18. Verfahren nach Anspruch 17, wobei der genannte Parameter während einer Anfangskalibrierung auf Basis einer detektierten Korrelation zwischen einem ersten vorbestimmten Datenmuster in der genannten ersten Speicherschicht (S1) und einem zweiten vorbestimmten Datenmuster in der genannten zweiten Speicherschicht über dem genannten ersten vorbestimmten Datenmuster bestimmt wird.

**Revendications**

1. Appareil de lecture pour la lecture à partir d'un support d'enregistrement magnéto-optique (10) comprenant une première couche de stockage (S1) et une seconde couche de stockage (S2) et une couche de lecture (RO), dans lequel un domaine élargi menant à une impulsion de lecture est généré dans ladite couche de lecture (RO) par la duplication d'une région de marque à partir de ladite première ou de ladite seconde couche de stockage sur ladite couche de lecture par le biais de chauffage par une puissance de rayonnement à l'aide d'un champ magnétique externe, ledit appareil comprenant:

a) des moyens de réglage (290) pour régler ladite puissance de rayonnement à une première valeur pour la lecture à partir de ladite première couche de stockage et à une seconde valeur pour la lecture à partir de ladite seconde couche de stockage, lesdites première et seconde couches de stockage étant séparément lisibles;
b) des moyens de détermination (290) pour déterminer un paramètre; et
c) des moyens de commande (290) pour commander ladite puissance de rayonnement sur la base dudit paramètre déterminé;

**caractérisé en ce que** ledit paramètre indique la diaphonie entre lesdites première et seconde couches de stockage.

2. Appareil de lecture selon la revendication 1, dans lequel lesdits moyens de détermination (290) sont adaptés de manière à déterminer ledit paramètre à partir d'une corrélation détectée entre une première configuration prédéterminée de données qui sont écrites dans ladite première couche de stockage (S1) et une seconde configuration prédéterminée de données qui sont écrites dans ladite seconde couche de stockage en haut de ladite première configuration prédéterminée de données.

3. Appareil de lecture selon la revendication 1, dans lequel lesdits moyens de détermination (290) sont adaptés de manière à déterminer ledit paramètre à partir d'une erreur détectée dans un signal de lecture d'une première configuration prédéterminée de données qui sont écrites dans ladite première couche de stockage (S1), ladite erreur étant causée par une seconde configuration prédéterminée de données qui sont écrites dans ladite seconde couche de stockage, lesdites première et seconde configurations prédéterminées de données étant écrites l'une en haut de l'autre.

4. Appareil de lecture selon la revendication 1, dans lequel lesdits moyens de commande (290) sont agencés de manière à commander le nombre de déterminations par lesdits moyens de détermination (290) en réaction à une information qui est écrite sur ledit support d'enregistrement et qui spécifie une caractéristique dudit support d'enregistrement (10).

5. Appareil de lecture selon la revendication 4, dans lequel ladite caractéristique spécifie une uniformité dudit support d'enregistrement.

**6.** Appareil de lecture selon la revendication 1, dans lequel lesdits moyens de commande (290) sont adaptés de manière à sauter ladite détermination par lesdits moyens de détermination (290) en réaction à une utilisation antérieure de l'information et de manière à commander ladite puissance de rayonnement sur la base d'au moins un paramètre de lecture qui est stocké sur ledit support d'enregistrement (10).

**7.** Appareil de lecture selon la revendication 6, dans lequel ledit appareil de lecture est adapté de manière à supprimer ladite opération de saut si un taux d'erreurs de lecture dépasse une valeur de seuil prédéterminée.

**8.** Appareil de lecture selon la revendication 6 ou 7, dans lequel ladite utilisation antérieure de l'information comprend au moins une identification du support d'enregistrement qui est stockée dans ledit appareil de lecture ou au moins une identification de l'appareil d'enregistrement qui est stockée sur ledit support d'enregistrement (10).

**9.** Appareil de lecture selon la revendication 8, dans lequel ladite utilisation antérieure de l'information est stockée en combinaison avec une information correspondante de temps et/ou de date.

**10.** Appareil de lecture selon la revendication 1, dans lequel lesdits moyens de détermination et de commande (290) sont adaptés de manière à réaliser ladite détermination du paramètre et ladite commande de la puissance à des rayons différents dudit support d'enregistrement.

**11.** Appareil de lecture selon l'une quelconque des revendications précédentes 1 à 10, dans lequel ledit appareil de lecture est adapté de manière à stocker au moins un paramètre de lecture ou un certain nombre de variables pour un algorithme qui décrit l'au moins un paramètre de lecture en fonction du rayon dudit support d'enregistrement (10).

**12.** Appareil de lecture selon la revendication 1, dans lequel ledit appareil de lecture est adapté de manière à commander ledit champ magnétique externe sur la base d'une différence entre les nombres d'impulsions de lecture détectées et attendues.

**13.** Appareil de lecture selon la revendication 1, dans lequel lesdits moyens de commande (290) sont adaptés à commander ladite puissance de rayonnement de manière à minimiser ledit paramètre.

**14.** Appareil de lecture selon la revendication 1, dans lequel ledit appareil de lecture est adapté de manière à lire ladite première couche de stockage (S1) indépendamment de ladite seconde couche de stockage (S2).

**15.** Appareil de lecture selon la revendication 14, dans lequel ladite première valeur de ladite puissance de rayonnement est déterminée par une température de compensation de ladite seconde couche de stockage (S2) et ladite seconde valeur de ladite puissance de rayonnement est déterminée par une température de compensation de ladite première couche de stockage (S1).

**16.** Appareil de lecture selon la revendication 1, dans lequel lesdits moyens de commande (290) sont adaptés de manière à réaliser ladite commande de la puissance indépendamment d'une commande du champ d'une fenêtre de reproduction qui est utilisée pour la duplication de la marque.

**17.** Procédé de lecture d'un support d'enregistrement magnéto-optique (10) comprenant une première couche de stockage (S1) et une seconde couche de stockage (S2) et une couche de lecture (RO), dans lequel un domaine élargi menant à une impulsion de lecture est généré dans ladite couche de lecture (RO) par la duplication d'une région de marque à partir de ladite première ou de ladite seconde couche de stockage sur ladite couche de lecture par le biais de chauffage par une puissance de rayonnement à l'aide d'un champ magnétique externe, ledit procédé comprenant les étapes consistant à:

a) régler ladite puissance de rayonnement à une première valeur pour la lecture à partir de ladite première couche de stockage et à une seconde valeur pour la lecture à partir de ladite seconde couche de stockage, lesdites première et seconde couches de stockage étant séparément lisibles;
b) déterminer un paramètre; et
c) commander ladite puissance de rayonnement qui est basée sur ledit paramètre déterminé;

**caractérisé en ce que** ledit paramètre indique la diaphonie entre lesdites première et seconde couches de stockage.

**18.** Procédé selon la revendication 17, dans lequel ledit paramètre est déterminé pendant un étalonnage initial qui est basé sur une corrélation détectée entre une première configuration prédéterminée de données qui sont écrites dans ladite première couche de stockage (S1) et une seconde configuration prédéterminée de données qui sont écrites dans ladite seconde couche de stockage en haut de ladite première configuration prédéterminée de données.

FIG.1

FIG.2

FIG.3

FIG.4

FIG.5

FIG.6

Set default readout laser power for first storage layer
S201

Read known data pattern from first storage layer
S202

Adjust laser power to minimize effects of the
known data pattern of second storage layer on the
read-out signal of the first storage layer
S203

Set default readout laser power for the second
storage layer
S204

Read known data pattern from the second
storage layer
S205

Adjust laser power to minimize the effects of the
known data pattern of the first storage layer on
the read-out signal of the second storage layer
S206

## FIG.7

| S1 | | -1 | +1 | -1 | +1 | -1 | +1 | -1 | +1 |
|---|---|---|---|---|---|---|---|---|---|
| S2 | | +1 | +1 | +1 | +1 | -1 | -1 | -1 | -1 |

## FIG.8

FIG. 9

**EP 1 665 249 B1**

**Patent documents cited in the description**

- WO 9939341 A
- JP 2002298465 A
- EP 0762410 A